# EUROPEAN PATENT APPLICATION

(11) **EP 1 629 895 A1**
(43) Date of publication of application: **01.03.2006**
(21) Application number: 05018427.4
(22) Date of filing: 24.08.2005
(51) Int. Cl.: B03C 3/12, B03C 3/155, B03C 3/09

(54) **Electric dust collector, and air conditioner and air purifier incorporating therein the dust collector**

(30) Priority: 31.08.2004 JP 2004251566
(71) Applicant: Matsushita Electrical Industrial Co., Ltd, Osaka 571-8501 (JP)
(72) Inventor: Akamine, Ikuo, Kusatsu-shi Shiga 525-0057 (JP); Kubo, Tsugio, Higashiomi-shi Shiga 527-0075 (JP)
(74) Representative: Turi, Michael

(57) **Abstract**

An electric dust collector includes an electric charge portion including a number of discharge electrodes and a matching electrode, a high voltage being applied to the discharge electrodes; a dust collecting portion including a dust collection filter; and an outer frame for accommodating therein the electric charge portion and the dust collecting portion as one body, to thereby form a dust collection unit. The matching electrode is a plate body provided with a plurality of openings, each of the discharge electrodes is of a saw blade shape and an end thereof is projected toward the matching electrode, and two or more discharge electrodes are arranged to point each of at least one of the openings of the matching electrode.

## Description

The present invention relates to an electric dust collector for capturing airborne dust particles; and, more particularly, to a high-efficiency electric dust collector that can be used in an air conditioner, an air purifier or the like.

A conventional electric dust collector generates a corona discharge by applying a high voltage between a discharge electrode and a matching electrode of an electric charge portion, to thereby charge airborne dust passing between the electrodes with electricity and the charged dust particles are then captured in the matching electrode which also serves as a dust collection unit for capturing dust particles therein (hereinafter, referred to as a dust collecting electrode) (see, for example, Reference 1: Japanese Patent No. 3411157).

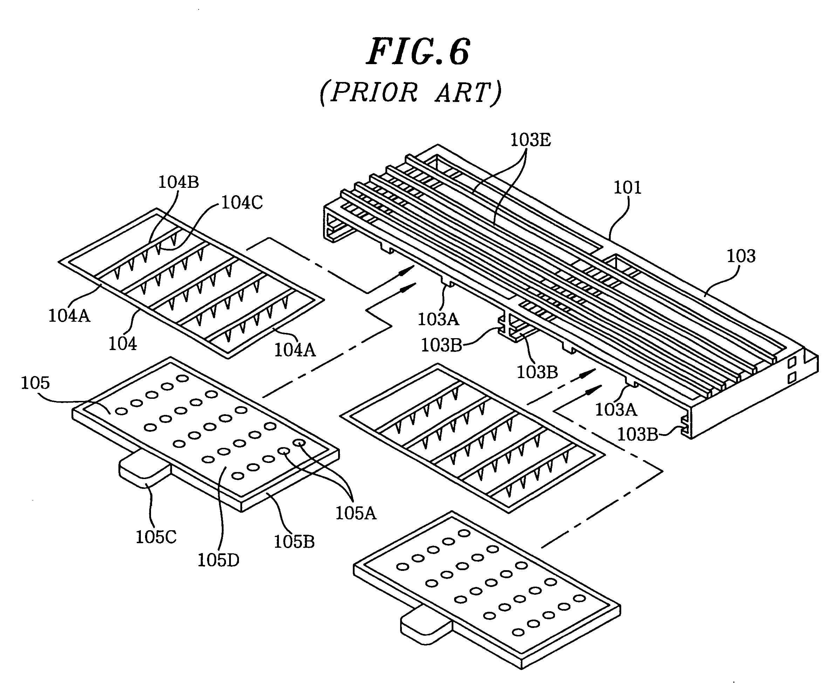

Fig. 6 shows the conventional electric dust collector disclosed in Reference 1. As shown in the figure, the electric dust collector includes frame 103, discharge electrodes 104, discharging needles 104C, dust collecting electrodes 105, and holes 105A.

In the above configuration, however, since each dust collecting electrode 105 having a plate shape serves as both the matching electrode for generating corona discharge and the dust collecting unit for charged dust particles, each plate-shaped dust collecting electrode 105 needs to have a predetermined dimension in order to improve the dust capturing efficiency, thereby causing increased air flow resistance.

It is, therefore, an object of the present invention to provide an electric dust collector that can not only reduce the air flow resistance by increasing the opening ratio of a plate-shaped matching electrode but also able to capture charged dust particles more efficiently by using a dust collection filter serving as a dust collecting portion.

In accordance with one aspect of the invention, there is provided an electric dust collector including: an electric charge portion including a number of discharge electrodes and a matching electrode, a high voltage being applied to the discharge electrodes; a dust collecting portion including a dust collection filter; and an outer frame for accommodating therein the electric charge portion and the dust collecting portion as one body, to thereby form a dust collection unit, wherein the matching electrode is a plate body provided with a plurality of openings, each of the discharge electrodes is of a saw blade shape and an end thereof is projected toward the matching electrode, and two or more discharge electrodes are arranged to point each of at least one of the openings of the matching electrode. In the above configuration, since the matching electrode is the plate body having multiple openings arranged to face the number of discharge electrodes, an electric discharge can be generated efficiently. Furthermore, by using the dust collection filter, dust particles in the air charged by a corona discharge can be collected in the dust collection filter efficiently.

Preferably, at least one of the openings of the matching electrode may have a shape in which its length along a direction parallel to a shorter side of the matching electrode is longer than that along a direction parallel to a longer side of the matching electrode. With this configuration, the opening of the matching electrode and the discharge electrode can be arranged efficiently.

Preferably, at least one of the openings of the matching electrode may be of an elongated circular shape or an elliptical shape. With this configuration, a variation in a shortest spatial distance between the discharge electrodes and the matching electrode becomes smaller. Accordingly, a more uniform corona discharge can be generated, and dust particles passing through a corona discharge area can be charged more efficiently. As a result, the dust capturing efficiency is improved.

Preferably, at least one of the openings of the matching electrode may be of a coupled-hole shape formed of plural circular, elongated circular or elliptical holes in which parts of two neighboring holes are communicated with each other. With this configuration, a variation in a shortest spatial distance between the discharge electrodes and the matching electrode becomes smaller. Accordingly, a more uniform corona discharge can be generated, and dust particles passing through a corona discharge area can be charged more efficiently. As a consequence, the dust capturing efficiency is improved.

Preferably, at least one of the openings of the matching electrode may be of a rectangular shape. With this configuration, the opening ratio can be increased, while reducing the air flow resistance.

Preferably, cutoff holes may be provided between the openings of the matching electrode. With this configuration, the opening ratio of plate body of the matching electrode can be increased without affecting the generation of corona discharge. Accordingly, the air flow resistance can be reduced, while improving the dust collecting efficiency.

Preferably, the dust collecting portion may be configured to be detachably attached to the dust collection unit. Therefore, this design allows repair and maintenance work by, for example, cleaning or replacing the dust collection filter when the dust collection filter serving as the dust collecting portion is contaminated with the dust particles after used for a long time.

Moreover, in accordance with another aspect of the invention, an air conditioner includes the electric dust collector, wherein the electric dust collector is disposed in an air flow passage of the air conditioner and a power is applied to the electric dust collector from a main body of the air conditioner. Therefore, the air conditioner can have a low air flow resistance and a high dust collecting efficiency.

Further, in accordance with still another aspect of the invention, an air purifier includes the electric dust collector, wherein the electric dust collector is disposed in an air flow passage of the air conditioner and a power is applied to the electric dust collector from a main body of the air conditioner. Therefore, the air conditioner can have a low air flow resistance and a high dust collecting efficiency.

The above and other objects and features of the present invention will become apparent from the following description of preferred embodiments given in conjunction with the accompanying drawings, in which:
Fig. 1 is a schematic perspective view of an electric dust collector in accordance with a first preferred embodiment of the present invention;
Fig. 2 sets forth a schematic view of a matching electrode in accordance with a second preferred embodiment of the present invention;
Fig. 3 presents a schematic view of another matching electrode in accordance with the second preferred embodiment of the present invention;
Fig. 4 provides a schematic view of a matching electrode in accordance with a third preferred embodiment of the present invention;
Fig. 5 offers a schematic view of another matching electrode in accordance with the third preferred embodiment of the present invention; and
Fig. 6 shows an exploded perspective view of a conventional electric dust collector.

Hereinafter, preferred embodiments of the present invention will be described in detail with reference to the accompanying drawings. Here, it is to be noted that the present invention is not limited thereto.

### First preferred embodiment

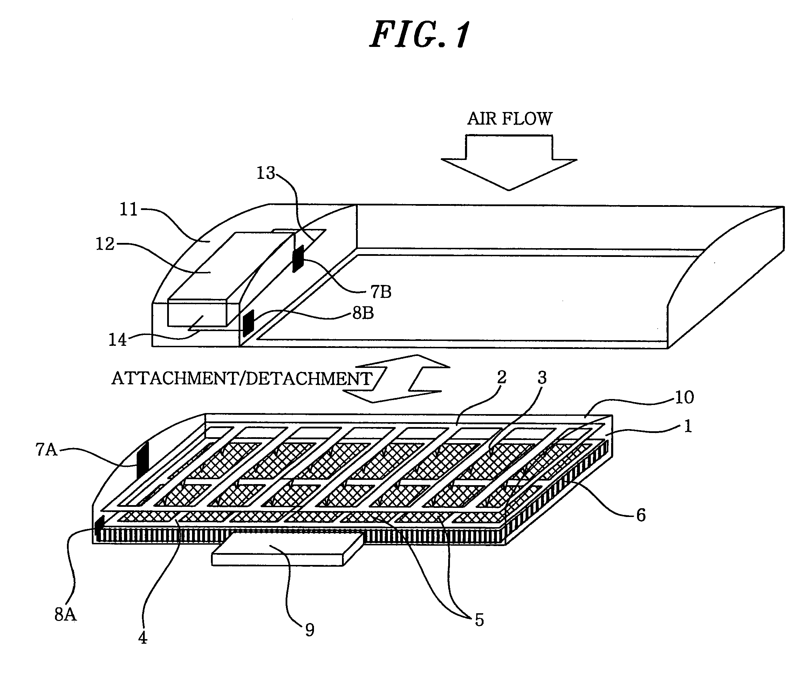

Referring to Fig. 1, there is provided a schematic perspective view of an electric dust collector in accordance with a first preferred embodiment of the present invention.

As shown in Fig. 1, a number of saw blade-shaped discharge electrodes 3 are configured as one electrical unit on discharge connection plate 2 which is formed of stainless steel or the like. Matching electrode 4 is a plate body formed of stainless steel or the like and provided with a plurality of rectangular openings 5. Ends of saw blade-shaped discharge electrodes 3 are projected toward the plate body of matching electrode 4, and discharge electrodes 3 and matching electrode 4 form an electric charge portion together. Here, matching electrode 4 and discharge electrodes 3 are configured such that every set of two saw blade-shaped discharge electrodes 3 faces corresponding one of the plurality of rectangular openings 5 of matching electrode 4.

Installed downstream of matching electrode 4 is honeycomb-shaped dust collection filter 6 serving as a dust collecting portion. Honeycomb-shaped dust collection filter 6 allows air to pass through easily and has a high dust capturing efficiency. The above-descried electric charge portion and the dust collecting portion are integrated as one body in outer frame 10, and outer frame 10 and handle 9 connected thereto form dust collection unit 1 together. Further, high voltage side contact point 7A is connected to discharge connection plate 2 while ground side contact point 8A is connected to matching electrode 4.

Dust collection unit 1 is attachably and detachably connected to power supply unit 11 for supplying a power to dust collection unit 1, and attachment or detachment of dust collection unit 1 can be performed by grabbing handle 9. Power supply unit 11 includes power supply 12 therein, and a high voltage potential is connected to high voltage side contact point 7B via high voltage side connection line 13 while a ground potential is connected to ground side contact point 8B via ground connection line 14. When dust collection unit 1 and power supply unit 11 are coupled to each other, their contact points, namely, high voltage side contact points 7A and 7B, and ground side contact points 8A and 8B are electrically connected to each other, respectively.

An operation and a function of the electric dust collector with the above configuration will now be described.

If a minus voltage is applied to a high voltage side from power supply 12 of power supply unit 11, a corona discharge is generated between saw blade-shaped discharge electrodes 3 and plate-shaped matching electrode 4. Then, if air propelled from a suction side flows through the corona discharge area, airborne dust particles are charged with electricity. Then, while passing through dust collection filter 6 serving as the dust collecting portion, the charged particles are efficiently captured in dust collection filter 6.

The voltage applied between saw blade-shaped discharge electrodes 3 and plate-shaped matching electrode 4 is preferably 3 kV or higher to practically capture the dust, and is preferably 10 kV or lower due to limitations of safety.

In accordance with the first embodiment of the present invention described above, since matching electrode 4 is the plate body provided with the rectangular openings 5 arranged to correspond to the plurality of saw blade-shaped discharge electrodes 3, an electric discharge can be generated efficiently. Moreover, by using dust collection filter 6, the dust particles in the air charged by the corona discharge can be collected in dust collection filter 6 efficiently. Particularly, by forming openings 5 to have the rectangular shapes, an opening ratio can be increased while reducing the air flow resistance. In addition, it is preferred that each rectangular opening 5 has a shape in which its length along a direction parallel to a shorter side of matching electrode 4 is longer than that along a direction parallel to a longer side of matching electrode 4. With this configuration, openings 5 and the plurality of discharge electrodes 3 can be arranged efficiently.

Further, although every set of two saw blade-shaped discharge electrodes 3 is arranged to face corresponding one of the plurality of openings 5 of matching electrode 4 in this preferred embodiment, it is also preferable to configure more than two discharge electrodes to correspond to one opening 5.

Moreover, although the minus voltage is applied to the high voltage side so the dust particles are charged with minus charges in this preferred embodiment, it is also possible to apply a plus voltage to the high voltage side and charge the dust particles with plus charges.

Furthermore, although the honeycomb-shaped filter is employed as dust collection filter 6 in this preferred embodiment, dust collection filter 6 can be of any shape, for example, a corrugated shape, as long as the air introduced thereto can pass therethrough.

### Second preferred embodiment

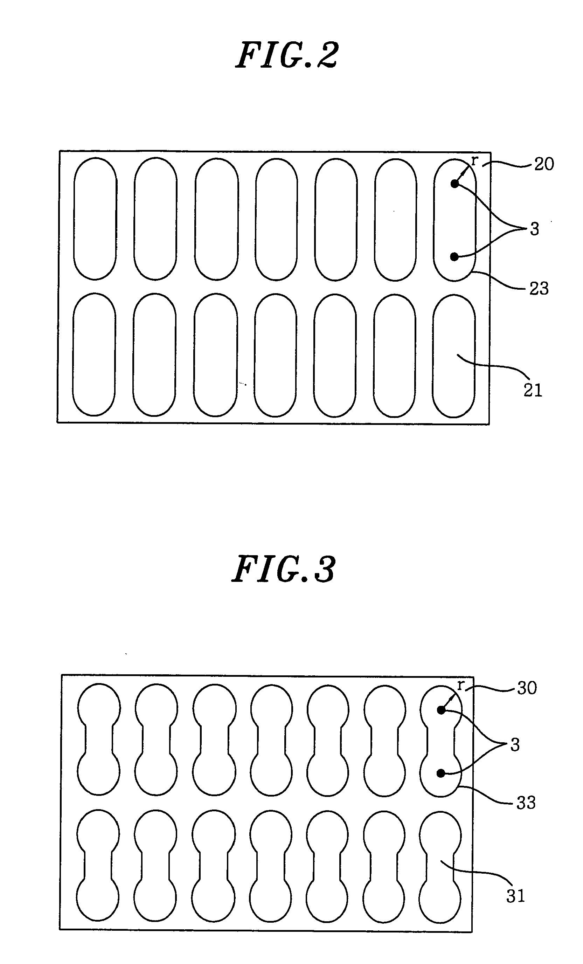

Figs. 2 and 3 show schematic views of matching electrodes of an electric dust collector in accordance with a second preferred embodiment of the present invention. In Fig. 2, matching electrode 20 is provided with openings 21 each having an elongated circular shape and, in Fig. 3, matching electrode 30 is provided with openings 31 each having a coupled-hole shape formed of two or more circular holes (two circular holes in Fig. 3) in which parts of two neighboring circular holes are communicated with each other.

In Figs. 2 and 3, every set of two saw blade-shaped discharge electrodes 3 are arranged to face corresponding one of openings 21 and 31 of matching electrodes 20 and 30, respectively. A corona discharge is generated between saw blade-shaped discharge electrodes 3 and matching electrodes 20 or 30. At this time, the corona discharge tends to be strongly concentrated in a position where a spatial distance between discharge electrodes 3 and matching electrode 20 or 30 is shorter. That is to say, the corona discharge is concentrated at edge portions 23 and 33 of openings 21 and 31 of matching electrodes 20 and 30, respectively.

However, by forming each opening 21 of matching electrode 20 in the elongated circular shape as shown in Fig. 2 or by forming each opening 31 of matching electrode 30 in the double-hole shape with parts of two neighboring circular holes communicated with each other as shown in Fig. 3, portions where the shortest spatial distance between discharge electrodes 3 and matching electrode 20 or 30 is formed as a distance r are increased. That is, a variation in the spatial distance between discharge electrodes 3 and matching electrode 20 or 30 becomes smaller than that in case of using rectangular openings 5. Accordingly, a more uniform corona discharge can be generated, and dust particles passing through the corona discharge area can be charged more efficiently. As a result, the dust collecting efficiency can be improved.

Further, the same effects can be obtained by forming each opening 21 to be of an elliptical shape or by forming each opening 31 to have a modified double-hole shape in which parts of two elongated circular holes or two elliptical holes are communicated with each other. In any of the above-mentioned cases, each of the openings 21 and 31 is preferably configured such that its length along a direction parallel to a shorter side of matching electrode 20 or 30 is longer than that along a direction parallel to a longer side of matching electrode 20 or 30. With this configuration, openings 21 and 31 and the plurality of discharge electrodes 3 can be arranged efficiently.

### Third preferred embodiment

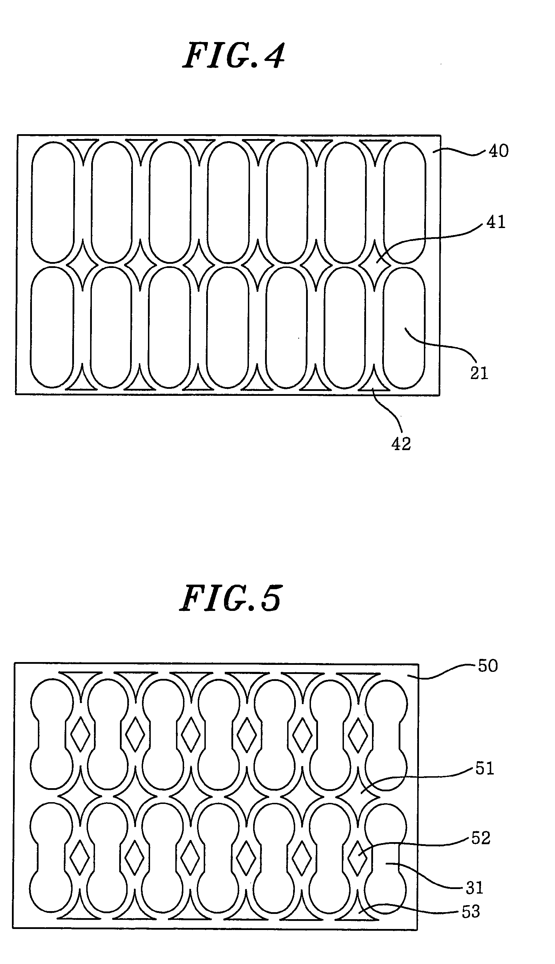

Figs. 4 and 5 show schematic views of matching electrodes in accordance with a third preferred embodiment of the present invention. In Figs. 4 and 5, cutoff holes 41, 42 and 51 to 53 are provided between openings 21 and 31 of matching electrodes 40 and 50, respectively.

By providing cutoff holes 41, 42 and 51 to 53 between openings 21 and 31 of matching electrodes 40 and 50, respectively, an air flow resistance can be reduced without affecting generation of the corona discharge while the amount of airflow through dust collection unit 1 increases, thus enhancing the dust collecting efficiency.

Further, though the above preferred embodiments of the present invention have been described for the case where the openings formed in a single matching electrode have a same shape, it is also possible to configure the matching electrode to have openings of above-described different shapes.

### Fourth preferred embodiment

An electric dust collector in accordance with a fourth preferred embodiment of the present invention will now be described with reference to Fig. 1.

Dust collection filter 6 serving as a dust collecting portion is installed in dust collection unit 1 such that it can be attachably and detachably connected to another component of dust collection unit 1. Therefore, it is possible to perform a repair and maintenance work by, for example, cleaning or replacing dust collection filter 6 when it is contaminated with dust particles from air after being used for a long time.

### Fifth preferred embodiment

A fifth preferred embodiment (not ,shown) of the present invention will be described below.

An air conditioner in accordance with the fourth embodiment of the present invention employs an electric dust collector including dust collection unit 1 and power supply unit 11. By installing the electric dust collector in an air flow passage, the air conditioner can have a low air flow resistance and a high dust collecting efficiency.

### Sixth preferred embodiment

A sixth preferred embodiment (not shown) of the present invention will be described below.

An air purifier in accordance with the sixth embodiment of the present invention employs an electric dust collector including dust collection unit 1 and power supply unit 11. By installing the electric dust collector in an air flow passage, the air purifier can have a low air flow resistance and a high dust collecting efficiency.

As described above, by increasing an opening ratio of a plate body of a matching electrode, the electric dust collector in accordance with the present invention can have a reduced air flow resistance while allowing a greater air volume to pass therethrough. Furthermore, by using a dust collection filter, charged dust particles can be efficiently collected therein, so dust collecting efficiency can be improved considerably. Therefore, the present invention can be applied to an air conditioner, an air purifier, and so forth.

While the invention has been shown and descried with respect to the preferred embodiments, it will be understood by those skilled in the art that various changes and modifications may be made without departing from the scope of the invention as defined in the following claims.

## Claims

1. An electric dust collector comprising:
an electric charge portion including a number of discharge electrodes and a matching electrode, a high voltage being applied to the discharge electrodes;
a dust collecting portion including a dust collection filter; and
an outer frame for accommodating therein the electric charge portion and the dust collecting portion as one body, to thereby form a dust collection unit,
wherein the matching electrode is a plate body provided with a plurality of openings, each of the discharge electrodes is of a saw blade shape and an end thereof is projected toward the matching electrode, and two or more discharge electrodes are arranged to point each of at least one of the openings of the matching electrode.

2. The electric dust collector of claim 1, wherein at least one of the openings of the matching electrode has a shape in which a length of said at least one of the openings along a direction parallel to a shorter side of the matching electrode is longer than that along a direction parallel to a longer side of the matching electrode.

3. The electric dust collector of claim 2, wherein said at least one of the openings of the matching electrode has any one of an elongated circular shape and an elliptical shape.

4. The electric dust collector of claim 2, wherein said at least one of the openings of the matching electrode is of a coupled-hole shape formed of any ones of plural circular holes, elongated circular holes and elliptical holes in which parts of two neighboring holes are communicated with each other.

5. The electric dust collector of claim 2, wherein at least one of the openings of the matching electrode is of a rectangular shape.

6. The electric dust collector of any one of claims 1 to 5, wherein a cutoff hole is provided between the openings of the matching electrode.

7. The electric dust collector of any one of claims 1 to 6, wherein the dust collecting portion is configured to be detachably attached to the dust collection unit.

8. An air conditioner comprising the electric dust collector of any one of claims 1 to 7, wherein the electric dust collector is disposed in an air flow passage of the air conditioner and a power is applied to the electric dust collector from a main body of the air conditioner.

9. An air purifier comprising the electric dust collector of any one of claims 1 to 7, wherein the electric dust collector is disposed in an air flow passage of the air purifier and a power is applied to the electric dust collector from a main body of the air purifier.
